# EUROPEAN PATENT APPLICATION

(11) **EP 3 487 046 A1**
(43) Date of publication of application: **22.05.2019**
(21) Application number: 17827159.9
(22) Date of filing: 27.02.2017
(51) Int. Cl.: H02K 5/24, F04B 39/00, F04C 29/00, H02K 7/14

(54) **MOTOR AND MOTOR-MOUNTED DEVICE**

(30) Priority: 15.07.2016 JP 2016140544
(71) Applicant: Mitsubishi Heavy Industries, Ltd., Tokyo 108-8215 (JP)
(72) Inventor: YAKUSHIJI, Shunsuke, Tokyo 108-8215 (JP)
(74) Representative: Cabinet Beau de Loménie
(86) International application number: PCT/JP2017/007450
(87) International publication number: WO 2018/012024

(57) **Abstract**

Provided are a motor and a motor-mounted device that are capable of reducing noise by further suppressing transmission of vibration from joined parts between a stator and a casing. A motor 2 is provided with: a rotor 22 that is coupled to a shaft 6; a stator 21 that surrounds the rotor 22; and a casing 4 that houses the rotor 22 and the stator 21. The stator 21 is joined to the casing 4 by a plurality of joined parts P distributed in a peripheral direction D1 of the stator 21. Assuming that there are a plurality of antinodes distributed in the peripheral direction D1 with regard to a second, third or fourth vibration mode, the positions of the joined parts P in the peripheral direction D1 are determined such that, simultaneously when one of the antinodes A is positioned at one of the plurality of joined parts P, no other antinodes A are positioned at other joined parts P.

## Description

### Technical Field

The present invention relates to a motor (electric motor), and a motor-mounted device, such as an electric compressor, on which the motor is mounted.

### Background Art

Motors generate vibration with rotation of a rotor with respect to a stator. In order to reduce noise resulting from vibration of the motors, it is expected to suppress transmission of vibration from the motor to the outside.

For that purpose, it is advisable to reduce the area where an outer peripheral part of the stator is joined to a casing. Hence as a method of joining the stator and the casing together, it is preferable to adopt point joining at a plurality of points distributed in a peripheral direction of the stator rather than adopting a method (for example, shrinkage fitting) of joining an outer peripheral part of the stator and an inner peripheral part of the casing over a wide range in the peripheral direction (for example, Patent Document 1).

In Patent Document 1, the outer peripheral part of the stator is welded to the casing at three points provided at regular intervals in the peripheral direction at a first height in an axial direction of the motor, and the outer peripheral part of the stator is welded to the casing at three welding points provided at regular intervals in the peripheral direction even at a second height below the first height. Also, the three welding points at the first height and the three welding points at the second height are shifted from each other such that one welding point at the second height is positioned at a middle position between two welding points adjacent to each other in the peripheral direction at the first height.

According to Patent Document 1, by relatively shifting the plurality of welding points in the peripheral direction from each other at the first height and the second height having different heights, vibration of the motor is dispersed in a height direction and the peripheral direction and transmitted to the casing. Thus, the vibration can be reduced.

### Citation List

### Patent Literature

Patent Document 1: Japanese Unexamined Patent Application Publication No. 2008-255808

### Summary of Invention

### Technical Problem

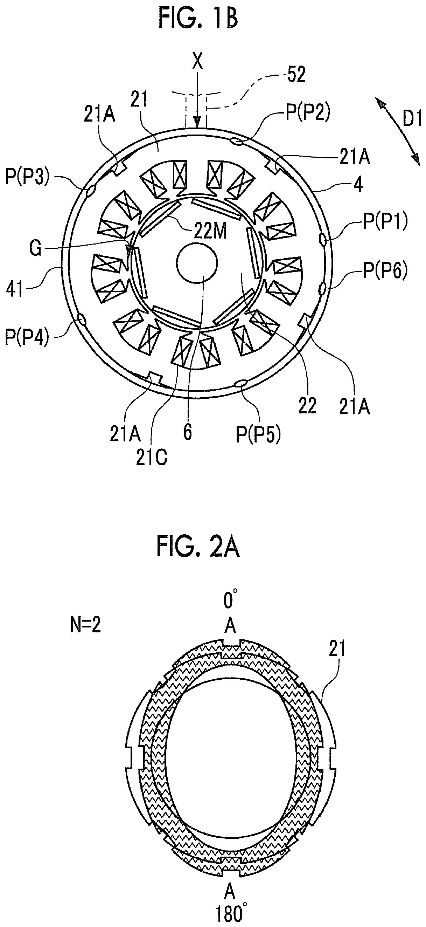

The motor vibrates in a vibration mode corresponding to its own natural frequency. The vibration mode can be classified into a plurality of modes having different frequencies and orders, and examples of the vibration modes are illustrated in Figs. 2A to 2C. An order (N) is equivalent to the number of antinodes A of a vibration mode.

In the vibration modes, if frequency rises with N = 2 as the minimum, high-order vibration modes overlap each other. With the rotation of the motor, a vibration mode also rotates, and the positions of antinodes A having a relatively large amplitude vary in the peripheral direction. When the antinodes A are positioned at joined points between the stator and the casing, the amount of transmission of vibration from the motor to the casing is large.

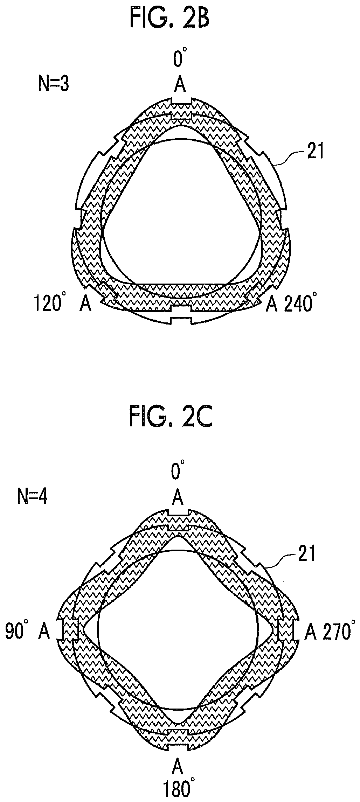

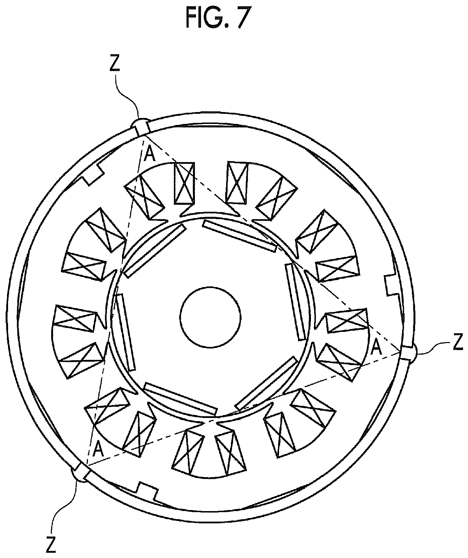

Since the magnetic exciting force of the motor rotates and the vibration mode also rotates, it is inevitable that the positions of the antinodes come around to the joined points. However, if the positions of the plurality of antinodes distributed in the peripheral direction simultaneously coincide with the plurality of joined points distributed in the peripheral direction, respectively, the amount of transmission of vibration increases compared to a case where one of the antinodes coincides with a joined point. In Patent Document 1, since three welding points Z are positioned at equal intervals both at the first height and the second height as illustrated in Fig. 7, similarly, there are timings at which the positions of three antinodes A in the vibration mode of Fig. 2B positioned at equal intervals simultaneously coincide with the three welding points Z as indicated by two-dot chain line in Fig. 7. While the rotor of the motor makes one rotation, timings at which the positions of the antinodes A simultaneously coincide with the three welding points Z are 2 times in total with regard to the first height and the second height, and the vibration is transmitted to the outside via the respective joined points at the positions of the antinodes at each timing.

As explained above, an object of the invention is to provide a motor and a motor-mounted device that are capable of reducing noise by further suppressing transmission of vibration from joined parts between a stator and a casing. Solution to Problem

A motor of the invention includes a rotor that is coupled to a shaft; a stator that surrounds the rotor; and a casing that houses the rotor and the stator. The stator is joined to the casing by a plurality of joined parts distributed in a peripheral direction of the stator.

Also, in the invention, assuming that there are a plurality of antinodes distributed in the peripheral direction with regard to a second, third or fourth vibration mode, positions of the plurality of joined parts in the peripheral direction are determined such that, when one of the antinodes is positioned at one of the plurality of joined parts, no other antinodes are simultaneously positioned at other joined parts P.

In the motor of the invention, it is preferable that antinodes of vibration distributed in the peripheral direction at intervals of 0°, 90°, 120°, 180°, 240°, and 270° are assumed as the plurality of antinodes.

In the motor of the invention, the plurality of joined parts can also be distributed in an axial direction of the stator in addition to the peripheral direction.

In the motor of the invention, at a first position in an axial direction of the stator, the positions of the plurality of joined parts in the peripheral direction can be determined in accordance with one solution that satisfies a condition that, simultaneously when one of the plurality of antinodes is positioned at one of the plurality of joined parts, no other antinodes are positioned at other joined parts, and at a second position in the axial direction of the stator, the positions of the plurality of joined parts in the peripheral direction can be determined in accordance with another solution that satisfies the condition.

A motor-mounted device of the invention includes the above-described motor; and a device body driven by the motor.

In the motor-mounted device of the invention, the device body is, for example, a compression mechanism that compresses a fluid.

In the motor-mounted device of the invention, it is preferable that a member provided in the casing is positioned between joined parts adjacent to each other in the peripheral direction among the plurality of joined parts.

In the motor-mounted device of the invention, it is preferable that the device body is a compression mechanism that is housed in the casing together with the rotor and the stator to compresses a refrigerant, and the member is a support part that supports a gas-liquid separator, which separates the refrigerant into a gaseous phase and a liquid phase, to the casing, or a pipe that supplies the gaseous phase from the gas-liquid separator to the compression mechanism.

### Advantageous Effects of Invention

According to the invention, as will be described herein, the angles (0°, 90°, 120°, 180°, 240°, and 270°) at which the positions of the antinodes of the respective vibration modes of the orders that are likely to lead to noise are collected and taken into consideration, and the positions of the plurality of joined parts are determined such that the antinodes do not simultaneously coincide with two or more joined parts. Accordingly, transmission of vibration from the motor to the casing can be suppressed, and the noise resulting from the vibration of the motor can be reduced.

### Brief Description of Drawings

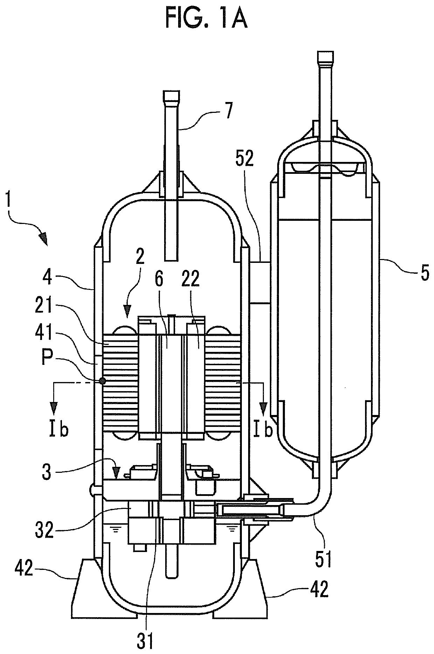

Figs. 1A and 1B are views illustrating an electric compressor related to an embodiment of the invention.
Fig. 1A is a longitudinal sectional view of the electric compressor.
Fig. 1B is a sectional view taken along line Ib-Ib of Fig. 1A.
Fig. 2A to 2C are views illustrating vibration modes of a motor.
Fig. 3 is a view illustrating positions of a plurality of joined parts distributed in a peripheral direction.
Fig. 4 is a view for illustrating an example of a process for obtaining the positions of the plurality of joined parts that satisfy a condition.
Fig. 5A is a view illustrating an example of joined parts resulting from shrinkage fitting. Fig. 5B is a view illustrating an example in which the joined parts are also distributed in an axial direction of a stator.
Figs. 6A to 6C are respectively views illustrating examples in which pluralities of joined parts are present at different positions in the axial direction of the stator.
Fig. 7 is a view illustrating a configuration of a related-art example in which a plurality of joined parts is positioned at equal intervals.

### Description of Embodiments

Hereinafter, embodiments of the invention will be described referring to the accompanying drawings. In the present embodiment, an electric compressor 1 will be described as an example of a device on which a motor 2 is mounted.

The electric compressor 1 illustrated in Figs. 1A and 1B includes the motor 2, a rotary compression mechanism 3 that compresses a refrigerant (fluid) by being driven by the motor 2, a casing 4 that houses the motor 2 and the compression mechanism 3, and a gas-liquid separator 5 supported by the casing 4. The casing 4 has a cylindrical peripheral wall 41.

The electric compressor 1 is a constituent element of a refrigerant circuit that constitutes an air conditioner, a refrigerator, or the like. The electric compressor 1 may include another compression mechanism for compressing a refrigerant, for example, a scroll compression mechanism.

The type of motor 2 is not particularly limited. Permanent magnets 22M (Fig. 1B) are embedded in a rotor 22 of the motor 2 of the present embodiment. A stator 21 that surrounds the rotor 22 is provided with stator coils 21C (Fig. 1B).

If the stator coils 21C are energized, the rotor 22 rotates with respect to the stator 21. A rotational drive force is output to a shaft 6 coupled to the rotor 22 by the rotation of the rotor 22. As a piston rotor 31 of the compression mechanism 3 is rotated with the rotational drive force transmitted from the shaft 6, the refrigerant is compressed within a cylinder 32. The refrigerant in a gaseous phase, separated from a liquid phase by the gas-liquid separator 5, is suctioned into the cylinder 32 through a suction pipe 51 extending from the gas-liquid separator 5.

The refrigerant compressed by the compression mechanism 3 flows to an upper part of an internal space of the casing 4 through a gap G, between the rotor 22 and the stator 21 (Fig. 1B), and grooves 21A (Fig. 1B), formed in an outer peripheral part of the stator 21, and is discharged from a discharge pipe 7 (Fig. 1A) to the refrigerant circuit.

Now, in the device on which the motor 2 is mounted, including the electric compressor 1, the motor 2 serves as a vibration source. The vibration of the motor 2 is transmitted to the casing 4 that supports the stator 21. In the present embodiment, by appropriately determining a point where the stator 21 is joined to the casing 4, the noise emitted from the casing 4, excited due to the vibration transmitted from the motor 2, is reduced.

As illustrated in Fig. 1B, the stator 21 is joined to the peripheral wall 41 of the casing 4 surrounding the outer peripheral part of the stator 21 at a plurality of points (P). The plurality of joined parts P where the stator 21 is joined to the peripheral wall 41 are distributed at intervals in a peripheral direction (D1) of the stator 21.

The stator 21 is welded (spot-welded) to the casing 4 by resistance heating resulting from locally applying an electric current while placing the peripheral wall 41 of the casing 4 on the outer peripheral part of the stator 21 and applying pressure there between. If spot welding is used, residual compressive stress can be reduced, leading to reduced iron loss and thus increased efficiency for motor 2. In addition, the stator 21 can be locally joined to the casing 4 by projection welding, friction stir spot welding, or the like.

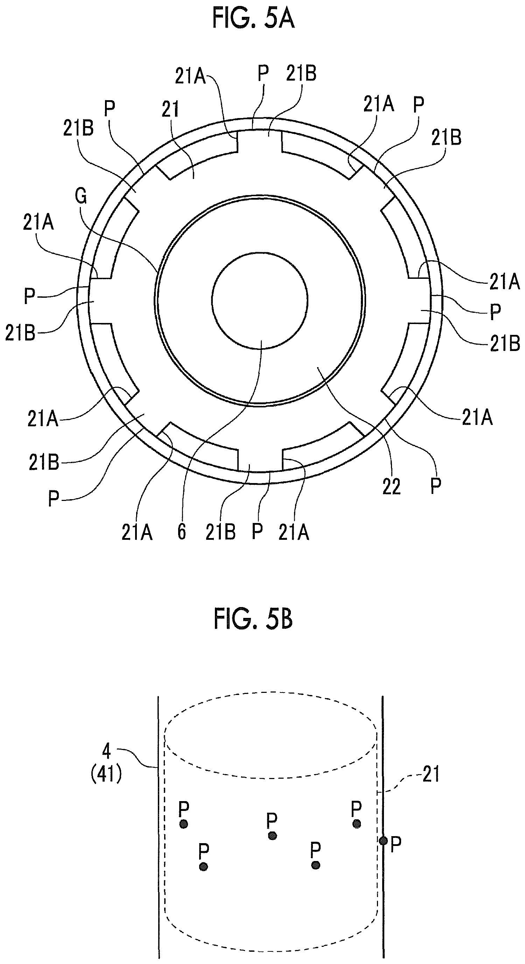

As long as the joining area between the stator 21 and the casing 4 is locally limited in the peripheral direction, the stator 21 may be joined to the casing 4 by shrinkage fitting, pressure welding, or the like. For example, as illustrated in Fig. 5A, even in a case where a tip of a protruding strip 21B between a groove 21A and a groove 21A through which the refrigerant passes in the stator 21 is shrinkage-fitted to the casing 4, the stator 21 is locally joined to the casing 4 in the peripheral direction.

In the present embodiment, as illustrated in Fig. 1A and Fig. 1B (which is a sectional view taken along line Ib-Ib of Fig. 1A), the joined parts P are positioned at six points positioned at predetermined heights in the axial direction of the stator 21.

Although the joined parts P are six (P1 to P6) here, two or more points distributed in the peripheral direction (D1) can be selected as the joined parts P also in consideration of the joining strength between the stator 21 and the casing 4.

Hereinafter, selection of peripheral positions of the joined parts P that influence the transmission of vibration from the stator 21 to the casing 4 in a relationship between the positions of antinodes of a vibration mode of the rotating motor 2 will be described. Even in a case where the plurality of joined parts P are distributed in the axial direction of the stator 21 as illustrated in Fig. 5B, the positions of the joined parts P may be selected in the same way as follows. The plurality of joined parts P where the stator 21 is joined to the casing 4 do not need to be positioned in the same section (cross-section) of the motor 2.

In selecting the positions of the joined parts P, the vibration modes of the motor 2 illustrated in Figs. 2A to 2C are taken into consideration. Fig. 2A schematically illustrates a second (N = 2) vibration mode with two antinodes A of vibration. The motor 2 vibrates so as to repeat expansion or reduction in a radial direction from an axial center about the axial center, and the amplitude thereof is the largest at the positions of the antinodes A.

Similar to Fig. 2A, Fig. 2B illustrates a third vibration mode with three antinodes A, and Fig. 2C illustrates a fourth vibration mode with four antinodes A. Frequency rises in order of Fig. 2A, Fig. 2B, and Fig. 2C.

In the respective vibration modes, a plurality of antinodes A are distributed at equal intervals (at equal angles with respect to the axial center) in the peripheral direction of the stator 21.

If an arbitrary position in the peripheral direction of the stator 21 is 0°, antinodes A are present at 0° and 180° in Fig.2A, antinodes A are present at 0°, 120°, and 240° in Fig. 2B, and antinodes A are present at 0°, 90°, 180°, and 270° in Fig. 2C.

Even if the vibration modes of the motor 2 are different from each other in the configuration and size of the motor 2, the vibration modes show the same tendency as Figs. 2A to 2C.

Higher-order vibration modes, corresponding to frequencies higher than the frequencies corresponding to Figs. 2A to 2C are not illustrated. In the present embodiment, since sound pressure level is high, the positions of the joined parts P are selected in consideration of the second to fourth (N is 2 to 4) vibration modes corresponding to relatively low frequencies that are likely to lead to noise.

Since the vibration amplitude is the largest at the positions of the antinodes A, the amount of transmission of vibration from the motor 2 to the casing 4 is large when the antinodes A are positioned at the joined parts P.

Since the vibration modes are also rotating with the rotation of the motor 2, the antinodes A of any vibration mode necessarily arrive at the respective joined parts P.

However, if the positions of the plurality of joined parts P are determined at equal intervals without taking the vibration modes into consideration, as illustrated in Fig. 7, the positions of the antinodes A of the vibration mode of Fig. 2B coincide with a plurality of joined parts (Z), respectively. And the amount of transmission of vibration increases.

In the present embodiment, the transmission of vibration from the motor 2 to the casing 4 is suppressed by avoiding that the antinodes A are simultaneously positioned at the plurality of joined parts P in consideration of the vibration modes.

Here, if the positions of the antinodes A of the vibration modes to overlap each other with 0° of Figs. 2A to 2C as a reference are collected and the angles of the antinode A are listed, there are 0°, 90°, 120°, 180°, 240°, and 270°.

Since the positions of the antinodes A are displaced with the rotation of the motor 2, assuming the antinodes A distributed at intervals of 0°, 90°, 120°, 180°, 240°, and 270°, the positions of the plurality of joined parts P in the peripheral direction may be determined such that, when one of the plurality of antinodes A is positioned at one of the plurality of joined parts P, the other antinodes A are not simultaneously positioned at the other joined parts P.

That is, it is preferable to determine the positions of the respective joined parts P so as to satisfy the condition that "antinodes A are not simultaneously positioned at two or more joined parts P".

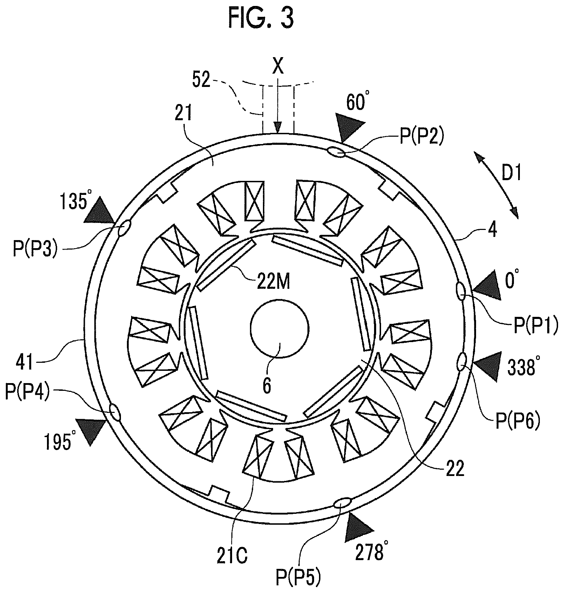

The positions of the respective joined parts P of the present embodiment is determined as illustrated in Fig. 3 so as to avoid the positions of the arbitrary 0° and 90°, 120°, 180°, 240°, and 270° that are angles measured to one side in the peripheral direction D1 with 0° as a starting point, in accordance with one of the solutions that satisfy this condition.

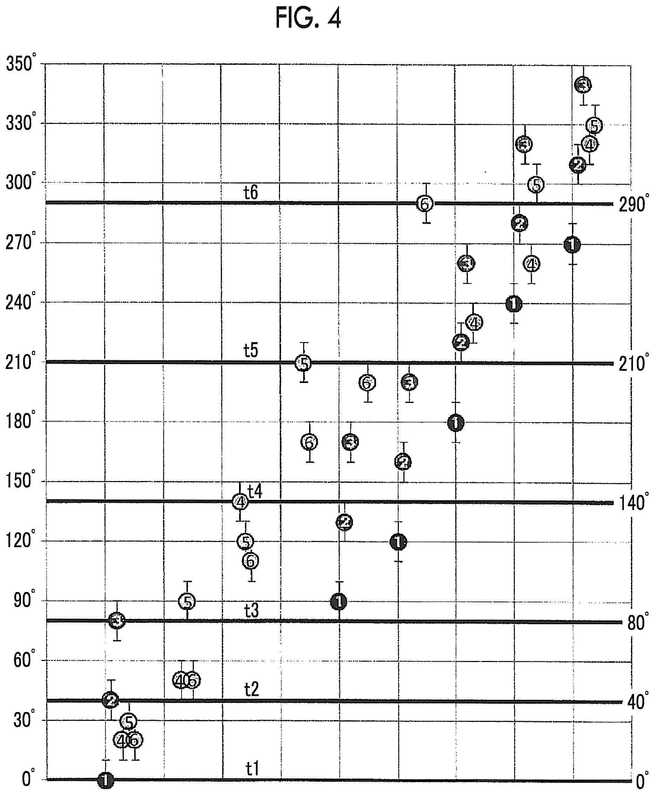

Hereinafter, an example of a process in which the positions of six joined parts P are determined so as to satisfy the condition that "antinodes A are not simultaneously positioned at two or more joined parts P" will be described. In Fig. 4, straight lines t1 to t6 of the same number (six in that case) as the number of the joined parts P are drawn.

0° to 360° illustrated in Fig. 4 are angles when an arbitrary position in the peripheral direction of the stator 21 is taken as a reference 0°.

If an angle at which any one of the straight lines t1 to t6 is positioned is individually changed up and down, the angles of the other straight lines and the display of circled numbers "1" to "6" are changed by appropriate calculation, and whether the above-described condition is satisfied can be visually checked depending on positional relationships between the straight lines t1 to t6 and the circled numbers. A calculation sheet as illustrated in Fig. 4 can be created, for example, using spreadsheet software or the like.

The positions of the joined parts P1 to P6 can be determined so as to have the intervals of the angles of the straight lines t1 to t6 illustrated in Fig. 4.

The straight line t1 represents a timing at which one of the angles (0°, 90°, 120°, 180°, 240°, and 270°) of the antinodes A listed above coincides with the joined part P1. The same timing is illustrated on the straight line t1. Similarly, the straight line t2 represents a timing at which one of the listed angles of the antinodes A coincides with the joined part P2, and the same timing is illustrated on the straight line t2. The same applies to t3 and the subsequent ones, and the straight line t3, the straight line t4, the straight line t5, and the straight line t6 correspond to the joined part P3, the joined part P4, the joined part P5, and the joined part P6, respectively.

Circled numbers "1" illustrated in Fig. 4 represent the positions of the respective joined parts P1 to P6 at a timing at which one of the antinodes A coincides with the joined part P1. "1" on the straight line t1 represents the position of the joined part P1, and the other numbers "1" represent the respective positions of the joined parts P2 to P6.

Similarly, circled numbers "2" represent the positions of the respective joined parts P1 to P6 at a timing at which one of the antinodes A coincides with the joined part P2. "2" on the straight line t2 represents the position of the joined part P2, and the other numbers "2" represent the respective positions of the joined part P1 and P3 to P6. The same applies to the circled numbers "3", "4", "5", and "6".

As illustrated in Fig. 4, only "1" is positioned on the straight line t1 and "2" to "6" are not positioned on the straight line t1. This means that, at the timing P1 of the straight line t1, that is, at which one of the antinodes A is positioned at the joined part P1, none of the other antinodes A is simultaneously positioned at the other joined parts P2 to P6.

If an antinode A were positioned at any of the other joined parts P2 to P6 at the timing at which one of the antinodes A is positioned at the joined part P1, numbers other than "1" would be displayed on the straight line t1, for example "1" and "5".

Similar to the straight line t1, the fact that only "2" is positioned on the straight line t2, and that "1" and "3" to "6" are not positioned on the straight line t1 means that, at the timing P1 of the straight line t2, that is, at which one of the antinodes A is positioned at the joined part P2, no antinode A is simultaneously positioned at any of the other joined parts P1 and P3 to P6. The same applies to the straight lines t3 to t6.

As illustrated in Fig. 4, in a case where only one number coincides with each of the straight lines t1 to t6, the angles (refer to the right end of Fig. 4) at which the straight lines t1 to t6 are positioned is one solution that satisfies the condition of "the antinodes A are not simultaneously positioned at two or more joined parts P" (for Fig. 4 is a pattern "f" of the following table). That is, the positions of the six joined parts P1 to P6 can be determined at intervals of angles (0°, 40°, 80°, 140°, 210°, and 290°) at which that the straight lines t1 to t6 illustrated in Fig. 4 are positioned, respectively.

The positions of the joined parts P1 to P6, determined in accordance with another solution obtained by changing the angles of the straight lines t1 to t6, are illustrated in Fig. 3 (a pattern "a" of the following table).

Pattern examples of combinations of the angles of the joined parts P1 to P6 also including other solutions are shown below.

**[Table 1]**

| Pattern Examples of Combinations of Angles of Joined Parts (In case of 6-points fixation) | | | | | | |
|---|---|---|---|---|---|---|
| Patterns | | | | | | |
| a. (Fig. 3) | 0° | 60° | 135° | 195° | 278° | 338° |
| b. | 0° | 30° | 60° | 200° | 280° | 340° |
| c. | 0° | 60° | 130° | 200° | 280° | 340° |
| d. | 0° | 50° | 130° | 200° | 280° | 330° |
| e. | 0° | 40° | 80° | 140° | 250° | 290° |
| f. (Fig.4) | 0° | 40° | 80° | 140° | 210° | 290° |

The joined parts P1 to P6 can also be set to have intervals of angles of any of patterns "a" to "f" shown in the above table, with an arbitrary position 0° as a reference. The joined parts P1 to P6 do not need to be strictly positioned at the above angles - for example, a width of about 10° may be given to the positions of the joined parts P.

In addition to the above table, the positions of the joined parts P1 to P6 in the peripheral direction can be determined by using the calculation sheet of Fig. 4 or in accordance with solutions obtained by other appropriate methods.

Even if the number of joined parts P is less than 6 or equal to or more than 6, the positions of the respective joined parts P can be determined in accordance with the solution of the positions of the joined parts P that satisfy the condition, in the same way as in the case where the number of joined parts P is 6. In a case where the number of joined parts P is less than 6, angles can be selected by the number of joined parts P from six angles of one pattern of the above table, and the positions of the joined parts P in the peripheral direction can be determined at intervals of the selected angles. For example, in a case where the number of joined parts P is 3, the positions of the joined parts P may be determined at intervals of 0°, 135°, and 278° from the six angles of pattern "a".

Also in the example illustrated in Figs. 5A and 5B, the positions of the plurality of joined parts P distributed in the peripheral direction can be determined similarly.

When an antinode A coincides with one joined part P, it is preferable that the antinodes A coincide with the other joined parts P as little as possible. However, in a case where the number of joined parts P is large and in a case where a region where the joined parts P can be provided is limited in the peripheral direction, an antinode A is also allowed to coincide with a small number of (for example 2 or 3) joined parts P of the remaining joined parts P simultaneously when the antinode A coincides with one joined part P.

From the above, if the intervals of the angles of the joined parts P1 to P6 are obtained, where the reference position (0°) of the angles is set is determined. In that case, the positions of members, such as accessories provided in the casing 4, is taken into consideration. For example, as illustrated in Fig. 1A, the casing 4 is provided with the suction pipe 51 extending from the gas-liquid separator 5, and is provided with a stay 52 that supports a tank of the gas-liquid separator 5. The position of the stay 52 is illustrated by a dash-dot-dot line in Fig. 3. The position of the suction pipe 51 in the peripheral direction is the same as that of the stay 52.

In order to suppress a situation in which the vibration of the motor 2 is transmitted to the gas-liquid separator 5 and emitted as noise from the gas-liquid separator 5, it is preferable that a position X where the stay 52 and the suction pipe 51 are provided is positioned between adjacent ones of the plurality of joined parts P, particularly, at a middle position therebetween. If the distance from a joined part P to the position X is longer in the peripheral direction, the amount of transmission of vibration to be transmitted from the stator 21 through stay 52 and the suction pipe 51 to the gas-liquid separator 5 can be reduced.

In consideration of this, the positions of the joined parts P1 to P6 in the peripheral direction may be determined such that the position X is positioned between adjacent joined parts P, particularly, at a middle position therebetween.

In addition, the positions of the respective joined parts P1 to P6 can be determined in consideration of respective peripheral positions of a plurality of legs 42 (Fig. 1A) provided at a bottom portion of the casing 4, and the joining position of the cylinder 32 or the like of the compression mechanism 3 locally joined to the inner peripheral part of the casing 4 by spot welding, shrinkage fitting, or the like, similarly to the above position X.

In modification examples of the invention shown below, a plurality of joined parts P are distributed in the axial direction of the stator 21.

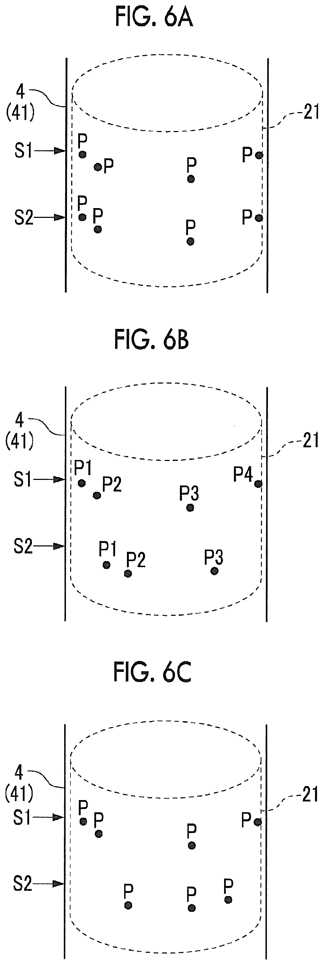

As illustrated in Figs. 6A to 6C, the stator 21 can be joined to the casing 4 at a plurality of positions (heights) in the axial direction, depending on the size of the stator 21, the number of joined parts P distributed in the peripheral direction, or the like.

In an example illustrated in Fig. 6A, six joined parts P (some of which are illustrated) are positioned at each of a first position S1 in the axial direction of the stator 21 and a second position S2, different from the first position S1.

The positions of the six joined parts P at the first position S1 in the peripheral direction and the positions of the six joined parts P at the second position S2 in the peripheral direction are determined on the basis of the same pattern of the above patterns "a" to "f".

Since the positions of the joined parts P distributed in the peripheral direction at the first position S1 and the positions of the joined parts P distributed in the peripheral direction at the second position S2 are also determined in accordance with the solution that satisfies the above-described condition, it is possible to avoid a situation in which an antinode A is simultaneously positioned at two or more joined parts P.

In Fig. 6B, the phases of joined parts P1 to P6 at the first position S1, of which the positions are selected in one pattern, and the phases of joined parts P1 to P6 at the second position S2, of which the positions are selected in the same pattern are shifted from each other. For example, supposing the joined parts P1 to P6 at the first position S1 are positioned at intervals of 0°, 40°, 80°, 140°, 250°, and 290° in accordance with the above pattern "e" shown in Table 1, the joined parts P1 to P6 at the second position S2 are advanced in phase by 30° and are positioned at intervals of 30°, 70°, 110°, 170°, 280°, and 320°.

In this way, when an antinode A coincides with the joined part P1 at the first position S1, the antinode A does not coincide with the joined part P1 at the second position S2. Thus, the amount of transmission of vibration from the stator 21 to the casing 4 can be suppressed.

In an example illustrated in Fig. 6C, the positions of six joined parts P at the first position S1 and the positions of six joined parts P at the second position S2 are determined on the basis of different patterns of the above patterns "a" to "f" shown in Table 1. Even in this way, it is possible to avoid a situation or a possibility in which, when an antinode A coincides with a joined part P at the first position S1, the antinode A coincides with an joined part P at the second position S2. Thus, the amount of transmission of vibration from the stator 21 to the casing 4 can be suppressed.

According to any of the embodiment and modification examples described above, the angles (0°, 90°, 120°, 180°, 240°, and 270°) at which the positions of the antinodes A of the respective vibration modes (Figs. 2A to 2C) of the orders that are likely to lead to noise are assumed, and the positions of the respective joined parts P are determined such that antinodes A do not simultaneously coincide with two or more joined parts P. Therefore, transmission of vibration from the motor 2 to the casing 4 or from the casing 4 to the outside can be suppressed, and the noise resulting from the radial vibration of the motor 2 can be reduced.

In the invention, the antinodes of the second, third, or fourth vibration mode are assumed. However, when fourth or higher-order modes are not included, the collected angles (0°, 120°, 180°, 240°) can be considered to be the positions of the plurality of antinodes A only in the second or third vibration mode, and the positions of the plurality of joined parts P in the peripheral direction may be determined such that, when one of the plurality of antinodes A is positioned at one of the plurality of joined parts P, the other antinodes A are not simultaneously positioned at the other joined parts P.

In addition to above, unless departing from the concept of the invention, it is possible to adopt or eliminate the components mentioned in the above embodiment or to appropriately change the above components to other components.

### Reference Signs List

- 1:: ELECTRIC COMPRESSOR (MOTOR-MOUNTED DEVICE)
- 2:: MOTOR
- 3:: COMPRESSION MECHANISM (DEVICE BODY)
- 4:: CASING
- 5:: GAS-LIQUID SEPARATOR
- 6:: SHAFT
- 7:: DISCHARGE PIPE
- 21:: STATOR
- 21A:: GROOVE
- 21B:: PROTRUDING STRIP
- 21C:: STATOR COIL
- 22:: ROTOR
- 22M:: PERMANENT MAGNET
- 31:: PISTON ROTOR
- 32:: CYLINDER
- 41:: PERIPHERAL WALL
- 42:: LEG
- 51:: SUCTION PIPE (PIPE)
- 52:: STAY (SUPPORT PART)
- A:: ANTINODE
- D1:: PERIPHERAL DIRECTION
- G:: GAP
- P, P1 TO P6:: JOINED PART
- S1:: FIRST POSITION
- S2:: SECOND POSITION
- t1 TO t6:: STRAIGHT LINE
- X:: POSITION

## Claims

1. A motor comprising:
a rotor that is coupled to a shaft;
a stator that surrounds the rotor; and
a casing that houses the rotor and the stator,
wherein the stator is joined to the casing by a plurality of joined parts distributed in a peripheral direction of the stator, and
wherein, assuming that there are a plurality of antinodes distributed in the peripheral direction with regard to a second, third or fourth vibration mode, positions of the plurality of joined parts in the peripheral direction are determined such that, when one of the plurality of antinodes is positioned at one of the plurality of joined parts, no other antinodes are simultaneously positioned at other joined parts.

2. The motor according to Claim 1,
wherein antinodes of vibration distributed in the peripheral direction at intervals of 0°, 90°, 120°, 180°, 240°, and 270° are assumed as the plurality of antinodes.

3. The motor according to Claim 1,
wherein the plurality of joined parts are also distributed in an axial direction of the stator in addition to the peripheral direction.

4. The motor according to Claim 2,
wherein the plurality of joined parts are also distributed in an axial direction of the stator in addition to the peripheral direction.

5. The motor according to any one of Claims 1 to 4,
wherein at a first position in an axial direction of the stator, the positions of the plurality of joined parts in the peripheral direction are determined in accordance with one solution that satisfies a condition that, simultaneously when one of the plurality of antinodes is positioned at one of the plurality of joined parts, no other antinodes are positioned at other joined parts, and at a second position in the axial direction of the stator the positions of the plurality of joined parts in the peripheral direction are determined in accordance with another solution that satisfies the condition.

6. A motor-mounted device comprising:
the motor according to any one of Claims 1 to 4; and
a device body driven by the motor.

7. A motor-mounted device comprising:
the motor according to Claim 5; and
a device body driven by the motor.

8. The motor-mounted device according to Claim 6,
wherein the device body is a compression mechanism that compresses a fluid.

9. The motor-mounted device according to Claim 7,
wherein the device body is a compression mechanism that compresses a fluid.

10. The motor-mounted device according to Claim 6,
wherein the casing is provided with a member positioned between joined parts adjacent to each other in the peripheral direction among the plurality of joined parts.

11. The motor-mounted device according to any one of Claims 7 to 9,
wherein the casing is provided with a member positioned between joined parts adjacent to each other in the peripheral direction among the plurality of joined parts.

12. The motor-mounted device according to Claim 10,
wherein the device body is a compression mechanism that is housed in the casing together with the rotor and the stator to compresses a refrigerant, and
wherein the member is a support part that supports a gas-liquid separator, which separates the refrigerant into a gaseous phase and a liquid phase, to the casing, or a pipe that supplies the gaseous phase from the gas-liquid separator to the compression mechanism.

13. The motor-mounted device according to Claim 11,
wherein the device body is a compression mechanism that is housed in the casing together with the rotor and the stator to compresses a refrigerant, and
wherein the member is a support part that supports a gas-liquid separator, which separates the refrigerant into a gaseous phase and a liquid phase, with the casing, or a pipe that supplies the gaseous phase from the gas-liquid separator to the compression mechanism.
